(19) Europäisches Patentamt / European Patent Office / Office européen des brevets

(11) **EP 4 202 865 B1**

(12) **EUROPEAN PATENT SPECIFICATION**

(45) Date of publication and mention
of the grant of the patent:
**11.02.2026 Bulletin 2026/07**

(51) International Patent Classification (IPC):
**G06V 20/58** *(2022.01)*

(52) Cooperative Patent Classification (CPC):
**G06V 20/586**

(21) Application number: **22215881.8**

(22) Date of filing: **22.12.2022**

(54) **PARKING ASSISTING DEVICE AND PARKING ASSISTING METHOD**

EINPARKHILFSVORRICHTUNG UND EINPARKHILFSVERFAHREN

DISPOSITIF D'AIDE AU STATIONNEMENT ET PROCÉDÉ D'AIDE AU STATIONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2021 JP 2021208938**

(43) Date of publication of application:
**28.06.2023 Bulletin 2023/26**

(73) Proprietor: **Faurecia Clarion Electronics Co., Ltd.**
**Saitama-shi, Saitama 330-0081 (JP)**

(72) Inventor: **MURAYAMA, Junya**
**SAITAMA, 330-0081 (JP)**

(74) Representative: **Novagraaf Group**
**Chemin de l'Echo 3**
**1213 Onex / Geneva (CH)**

(56) References cited:
**US-A1- 2009 128 364**

• **NEBIKER STEPHAN ET AL: "Outdoor Mobile Mapping and AI-Based 3D Object Detection with Low-Cost RGB-D Cameras: The Use Case of On-Street Parking Statistics", REMOTE SENSING, vol. 13, no. 16, 5 August 2021 (2021-08-05), pages 3099, XP093035310, DOI: 10.3390/rs13163099**
• **ZHANG JUNSHAN ET AL: "Parkmaster : an in-vehicle, edge-based video analytics service for detecting open parking spaces in urban environments", 12 October 2017 (2017-10-12), New York, New York, USA, pages 1 - 14, XP093035307, ISBN: 978-1-4503-5087-7, Retrieved from the Internet <URL:https://dl.acm.org/doi/pdf/10.1145/3132211.3134452> [retrieved on 20230328], DOI: 10.1145/3132211.3134452**

**Description**

[Field of Technology]

The present invention relates to a parking assisting device and to a parking assisting method.

[Prior Art]

Conventionally there have been disclosures of technologies relating to assisting in vehicle parking.

Japanese Unexamined Patent Application Publication 2016-101778 describes a parking assisting device comprising: an imaging portion for imaging outside of a vehicle; and a controlling portion for performing image recognition of a license plate or a wheel of a parked vehicle that is parked in a parking area imaged by the imaging portion, and, based on the license plate and/or the wheel that has been recognized through image recognition, evaluating also at least whether the type of parking space in the parking area is of the perpendicular parking type or the parallel parking type.

US 2009/128364 describes a parking device is for supporting a parking procedure, in which sensors record a vehicle environment and an evaluation unit ascertains an alignment of the parking space with the aid of the parking space environment.

The article Nebiker Stephan et al: "Outdoor mobile mapping and AI-Based 3D object detection with low-cost RGB-D Cameras: The Use Case of On-Street Parking Statistics", Remote Sensing, vol. 13, no. 16, 5 August 2021, page 3099, XP 093035310 describes a system and approach for creating on-street parking statistics.

[Summary of the Invention]

[Problem Solved by the Present Invention]

With the parking assisting device described in Patent Document 1, at least whether the type of parking space in a parking area is of a perpendicular parking type or of a parallel parking type is evaluated based on at least a number plate or a wheel, recognized through image recognition. Given this, if it is not possible to acquire an image of a number plate or a wheel it will not be possible to evaluate the type of parking.

The object of the present invention is to provide a parking assisting device and parking assisting method able to determine correctly the type of parking in a region wherein a vehicle is parked.

[Means for Solving the Problem]

In order to achieve the object set forth above, the invention relates to a parking assisting device according to claim 1.

[Effects of the Invention]

Given the parking assisting device and parking assisting method according to the present invention, the type of parking, either parallel parking, perpendicular parking, or angle parking, is evaluated, and based on the result of that evaluation, the type of parking for a region wherein a plurality of other vehicles is parked is evaluated as being the type of parking of the largest number of vehicles in the plurality of other vehicles.

Consequently, because the type of parking in a region wherein a plurality of other vehicles is parked is evaluated as being the type of parking of the greatest number of other vehicles, it is possible to determine correctly the type of parking of a region wherein a plurality of other vehicles is parked.

[Brief Descriptions of the Drawings]

FIG. 1 is a diagram showing an example of a structure of an onboard device that includes a parking assisting device.
FIG. 2 is a captured image showing an example of a region dividing portion and a process for a type evaluating portion.
FIG. 3 is a captured image showing an example of a process for evaluating a parking type.
FIG. 4 is a diagram showing the relationship between the parking type and the angle formed between the direction of travel of the vehicle and the direction of another vehicle.
FIG. 5 is a captured image showing an example of a process of a type determining portion.
FIG. 6 is a diagram showing an example of the process of the type determining portion.

FIG. 7 is a flowchart showing an example of a process of the parking assisting device.

[Forms for Carrying Out the Present Invention]

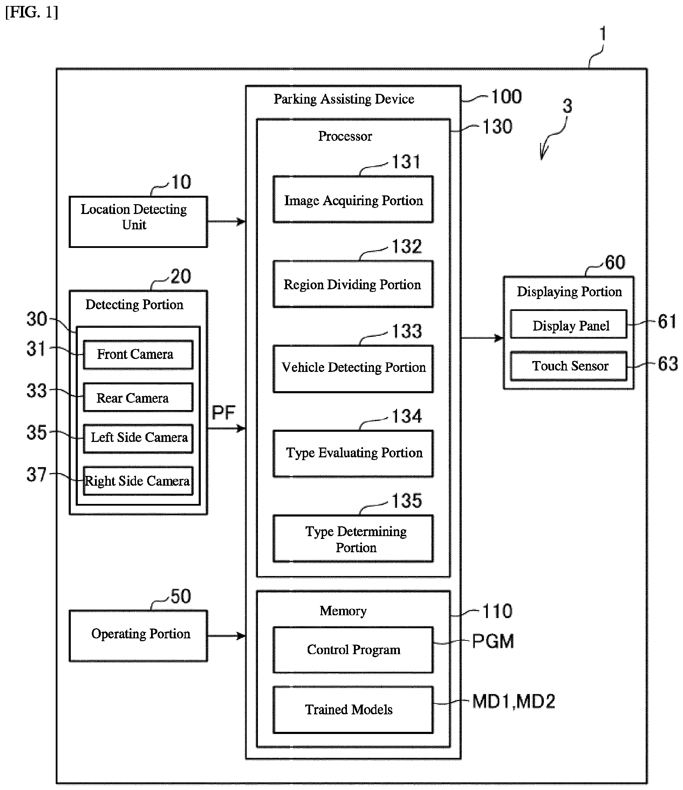

An embodiment according to the present invention will be explained below in reference to the drawings. FIG. 1 is a diagram showing an example of a structure of an onboard device 3 that includes a parking assisting device 100. The onboard device 3 is installed in a vehicle 1.

The onboard device 3 comprises a location detecting unit 10, a detecting portion 20, an operating portion 50, a displaying portion 60, and the parking assisting device 100.

The vehicle 1 corresponds to an example of a "vehicle."

The location detecting unit 10 detects the location of the vehicle 1. The location detecting unit 10 comprises a GNSS receiver for receiving a GNSS (Global Navigation Satellite System) signal and a processor for calculating the location of the vehicle 1 based on the GNSS signal received by the GNSS receiver. The GNSS receiver and processor are omitted from the drawings. The location detecting unit 10 outputs, to the parking assisting device 100, location information that indicates the location of the vehicle 1.

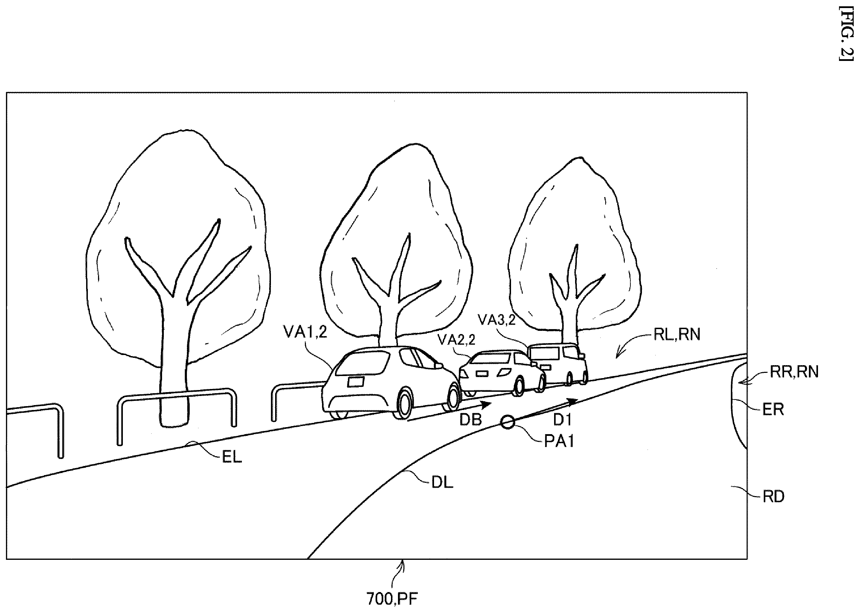

The detecting portion 20 comprises one or more sensors for detecting a plurality of other vehicles 2 (referencing FIG. 2) around the vehicle 1. The detecting portion 20 in the present embodiment comprises an imaging portion 30 as the sensor.

The detecting portion 20 outputs an image captured by the imaging portion 30, as detection information, to the parking assisting device 100.

In the present embodiment, the explanation will be for a case wherein the detecting portion 20 comprises a camera; however, the detecting portion 20 may comprise a radar or sonar sensor, or LiDAR, that is able to measure the distance to another vehicle 2 using radio waves, light, or the like.

The imaging portion 30 is equipped with a front camera 31 for imaging forward of the vehicle 1, a rear camera 33 for imaging rearward of the vehicle 1, a left side camera 35 for imaging toward the left side of the vehicle 1, and a right side camera 37 for imaging toward the right side of the vehicle 1.

Each of these cameras comprises an image sensor such as a CCD (Charge-coupled Device), CMOS (Complementary Metal-Oxide-Semiconductor), or the like, and a data processing circuit for generating a captured image from the image sensor.

The front camera 31 produces a captured image PF of a plurality of other vehicles 2 that are parked around the vehicle 1.

Although in the present embodiment a case is explained wherein the front camera 31 produces a captured image PF of a plurality of other vehicles 2 that are parked around the vehicle 1, the captured image PF may be generated by the imaging portion 30 instead.

The operating portion 50 receives an operation from a user that is an occupant of the vehicle 1. The user may be, for example, the driver. The operating portion 50 outputs, to the parking assisting device 100, an operating signal that corresponds to the operation that was received. The operation received by the operating portion 50 may be an operation for starting a parking type determining process, an operation for terminating a parking type determining process, or the like.

The operating portion 50 comprises, for example, a parking type determination ON switch, not shown, and a parking type determination OFF switch, not shown, where, when the parking type determination ON switch is pressed, the parking assisting device 100 receives an operation for starting the parking type determining process. Moreover, when the parking type determining process OFF switch is pressed during execution of the parking type determining process, the parking assisting device 100 receives an operation for terminating the parking type determining process.

Note that the "parking type determining process" indicates a process for the parking assisting device 100 to evaluate the parking type PK for each of the plurality of other vehicles 2, to evaluate the parking type PK of a region RN wherein the plurality of other vehicles 2 are parked.

Note that the parking type PK indicates either parallel parking PA, perpendicular parking PC, or angle parking PB.

The displaying portion 60 comprises a display panel 61 and a touch sensor 63. A liquid crystal display, an organic EL display, or the like, is used in the display panel 61.

The displaying portion 60 displays a display image on a display panel 61 based on display data inputted from the parking assisting device 100.

The touch sensor 63 uses a resistance film-type sensor or an electrostatic capacitance-type sensor. The displaying portion 60 detects, through the touch sensor 63, a touch operation by the finger of the user on the display panel 61, to generate a location signal indicating the operating location of the touch operation that has been detected. The displaying portion 60 outputs, to the parking assisting device 100, the location signal that has been generated.

The parking assisting device 100 is a computer comprising: a processor 130 such as a CPU (Central Processing Unit), an MPU (Micro Processing Unit), or the like; and a memory 110, such as a ROM (Read-Only Memory), a RAM (Random Access Memory), or the like. Moreover, the memory 110 comprises a storage device such as an HDD (Hard Disk Drive), an SSD (Solid State Drive), or the like.

The parking assisting device 100 comprises, in addition to these devices: an interface circuit for connecting to sensors, peripheral devices, and the like; an onboard network communication circuit for communicating with other onboard devices through an onboard network; and the like. The parking assisting device 100 achieves various types of functional structures through the processor 130 executing a control program PGM that is stored in the memory 110.

The parking assisting device 100 is structured from, for example, an ECU (Electronic Control Unit).

The parking assisting device 100 comprises an image acquiring portion 131, a region dividing portion 132, a vehicle detecting portion 133, a type evaluating portion 134, and a type determining portion 135. Specifically, through executing the control program PGM that is stored in the memory 110, the processor 130 functions as the image acquiring portion 131, the region dividing portion 132, the vehicle detecting portion 133, the type evaluating portion 134, and the type determining portion 135.

The image acquiring portion 131 acquires a captured image PF around the vehicle 1. The image acquiring portion 131 acquires a captured image PF produced by, for example, the front camera 31.

The region dividing portion 132 divides the captured image PF into a plurality of regions RN based on the travel direction D1 of the vehicle 1. The region dividing portion 132 extracts, from the captured image PF, a road image RD that is an image of the road traveled by the vehicle 1, and, based on the extracted road image RD, divides the captured image PF into a plurality of regions RN. In the present embodiment, a region RN is structured from a left side region RL and a right side region RR.

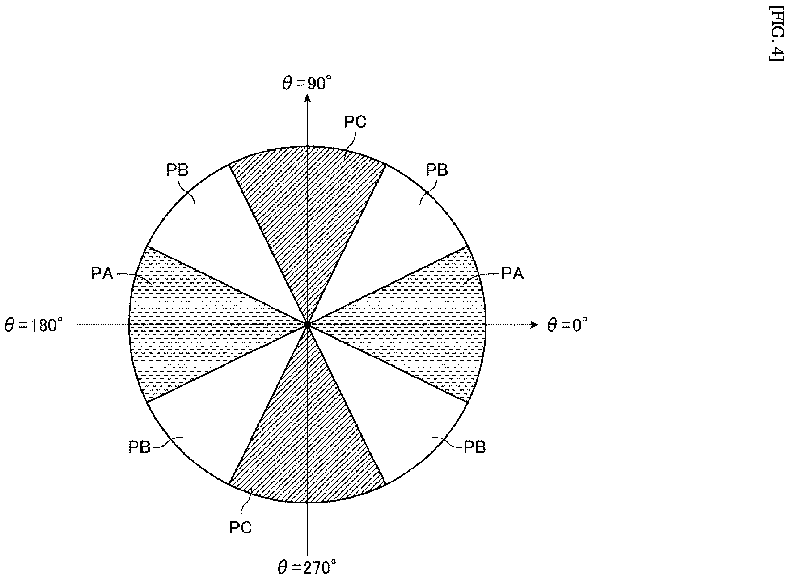

The process of the region dividing portion 132 will be explained further in reference to FIG. 2 and FIG. 4.

The vehicle detecting portion 133 uses the captured image PF to detect a plurality of other vehicles 2 that are parked around the vehicle 1. In the present embodiment, the vehicle detecting portion 133 detects a plurality of other vehicles 2 that are parked around the vehicle 1 through, for example, using a trained model MD1 that inputs the captured image PF and outputs the plurality of other vehicles 2. Note that the vehicle detecting portion 133 may detect a plurality of other vehicles 2 that are parked around the vehicle 1 by, for example, performing image processing on the captured image PF.

For example, the memory 110 stores the trained model MD1 that inputs a variety of captured images PF and outputs the locations or areas of the plurality of other vehicles 2. The trained model MD1 is a model that was trained through, for example, machine learning, such as deep learning, or the like. The trained model MD1 is structured from a neural network. The trained model MD1 is trained through supervised training that uses an input data set wherein various captured images PF of vehicles 2 are associated with locations of the vehicles 2 in the captured images PF or areas in the captured images PF. The locations of the vehicles 2 in the captured image PF, or the areas in the captured images PF, correspond to labels in supervised learning.

While in the present embodiment the explanation is for a case wherein the memory 110 provides a trained model MD1, there is no limitation thereto. For example, a server device that is connected so as to be able to communicate with the parking assisting device 100 may provide the trained model MD1 instead. In this case, the vehicle detecting portion 133 sends the captured image PF to the server device. The server device then finds the position or area of each of the vehicles 2 through the trained model MD2. The type evaluating portion 134 acquires the location and area of each of the vehicles 2 from the server device.

The type evaluating portion 134 evaluates the parking type PK, which indicates parallel parking PA, perpendicular parking PC, or angle parking PB, for each of the plurality of other vehicles 2. The type evaluating portion 134 detects, for example, the vehicle body direction DB for each of the plurality of other vehicles 2, and evaluates the parking type PK based on the vehicle body direction DB.

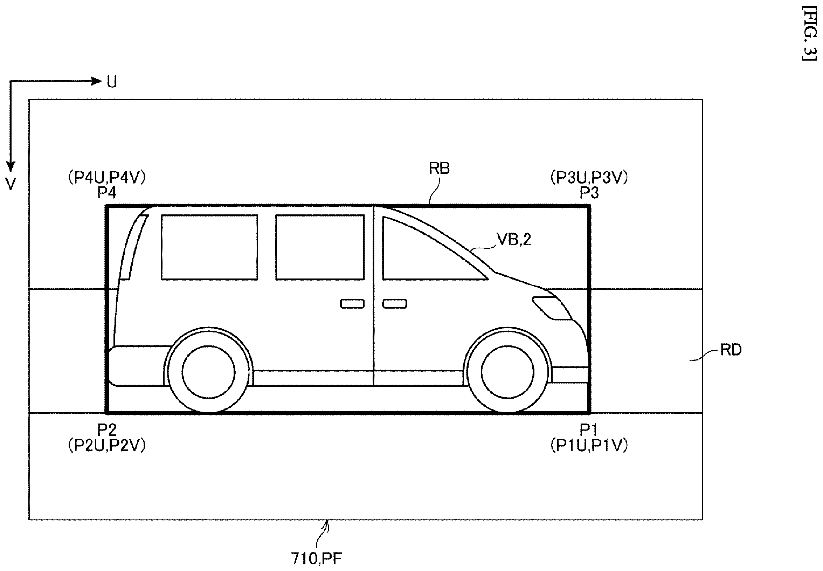

The process in the type evaluating portion 134 will be explained further in reference to FIG. 3 and FIG. 4.

Furthermore, the memory 110 stores the trained model MD2 that inputs captured images PF of each of the plurality of other vehicles 2 and outputs the vehicle body direction DB of each of the plurality of other vehicles 2. The type evaluating portion 134 may extract, from the captured image PF, captured images of each of the plurality of other vehicles 2, to find the vehicle body direction DB of each of the plurality of other vehicles 2 through inputting, into the trained model MD2, the captured image of each of the plurality of other vehicles 2.

The trained model MD2 is a model that was trained through machine learning such as, for example, deep learning. The trained model MD2 is structured from a neural network. The trained model MD2 is trained through supervised training that uses an input data set wherein various captured images PF of vehicles 2 are associated with vehicle body directions DB of the vehicles 2. The vehicle body direction DB of a vehicle 2 corresponds to a label in supervised learning.

While in the present embodiment the explanation is for a case wherein the memory 110 provides a trained model MD2, there is no limitation thereto. For example, a server device that is connected to be able to communicate with the parking assisting device 100 may provide the trained model MD2 instead. In this case, the type evaluating portion 134 sends the captured image PF of each vehicle 2 to the server device. The server device then finds the vehicle body direction DB of each of the vehicles 2 through the trained model MD2. The type evaluating portion 134 acquires the vehicle body direction DB of each of the vehicles 2 from the server device.

Based on the evaluation results by the type evaluating portion 134, the type determining portion 135 determines, as the parking type PK for the region RN in which the plurality of other vehicles 2 are parked, the parking type PK for the largest number of vehicles among the plurality of other vehicles 2. For each of a plurality of regions RN, for example, the type determining portion 135 determines, as the parking type PK, the parking type PK with the greatest number of vehicles.

The process in the type determining portion 135 will be explained further in reference to FIG. 2, FIG. 5, and FIG. 6.

The parking assisting device 100 displays, on the display panel 61, the evaluation result of the type determining portion 135, for example. The parking assisting device 100 displays, on the display panel 61, the various parking types PK for the plurality of regions RN in correspondence with a map image, for example.

The processes in the region dividing portion 132 and the type evaluating portion 134 will be explained next in reference to FIG. 2. FIG. 2 is a captured image 700 showing an example of processes in the region dividing portion 132 and the type evaluating portion 134. The captured image 700 corresponds to an example of a captured image PF.

In the captured image 700, the vehicle 1 travels on a road that corresponds to a road image RD. In FIG. 2 there is a curve toward the right with respect to the travel direction D1 of the vehicle 1. A left edge line EL indicates the location of the left edge of the road. A right edge line ER indicates the location of the right edge of the road. A driving line DL shows an example of the path traveled by the vehicle 1.

The region dividing portion 132 divides the captured image PF into a left side region RL and a right side region RR.

The left side region RL is the region to the left of the left edge line EL. The right side region RR is the region to the right of the right edge line ER. The left side region RL and right side region RR each corresponds to an example of the plurality of regions RN.

As illustrated in FIG. 2, other vehicles 2 are parked in the left side region RL. The vehicles 2 are detected by the vehicle detecting portion 133. The vehicles 2 include a first vehicle VA1, a second vehicle VA2, and a third vehicle VA3.

The type evaluating portion 134 detects the vehicle body direction DB of each of the other vehicles 2. In FIG. 2, the vehicle body direction DB of the first vehicle VA1 is indicated by the arrow. The travel direction D1 is the direction of travel of the vehicle 1 at the position PA1 opposite the first vehicle VA1 on the driving line DL. The type evaluating portion 134 evaluates the parking type PK depending on the angle $\theta$ formed between the travel direction D1 and the direction DB. In FIG. 2, the angle $\theta$ formed between the travel direction D1 and the direction DB is near zero, and thus the evaluation is that the parking type PK is parallel parking PA.

The relationship between the angle $\theta$ and the parking type PK will be explained further in reference to FIG. 4.

Although in FIG. 2, the explanation was for a case wherein the type evaluating portion 134 evaluated the parking type PK depending on the angle $\theta$ formed between the travel direction D1 and the direction DB, there is no limitation thereto. Instead, the parking type PK may be evaluated depending on the direction $\theta$ formed between the vehicle body direction DB of each other vehicle 2 and the travel direction D1 of the vehicle 1. The travel direction D1 of the vehicle 1 when the captured image 700 was captured, for example, may be used for the travel direction D1 of the vehicle 1.

An example of a process by which the type evaluating portion 134 evaluates the parking type PK of the vehicle 2 will be explained next in reference to FIG. 3. FIG. 3 is a captured image 710 showing an example of a process by which the type evaluating portion 134 evaluates the parking type PK of a vehicle 2. The captured image 710 corresponds to an example of a captured image PF.

The captured image PF includes a vehicle VB as another vehicle 2 that is parked on the road. The road image RD is an image of the road on which the vehicle VB is parked. The road extends in the direction that is perpendicular to the plane of the paper.

A horizontal axis U and a vertical axis V are noted in FIG. 3. The horizontal axis U is parallel to the horizontal direction in the captured image PF. The vertical axis V is parallel to the vertical axis in the captured image PF. The rectangular region RB indicated by the heavy lines is the rectangular region that minimizes the area that includes an image that corresponds to the vehicle VB. The four corners of the rectangular region RB are point P1, point P2, point P3, and point P4. Point P1 is the lower right corner of the rectangular region RB. Point P2 is the lower left corner of the rectangular region RB. Point P3 is the upper right corner of the rectangular region RB. Point P4 is the upper left corner of the rectangular region RB. The (U, V) coordinates of point P1, point P2, point P3, and point P4, respectively, are (P1U, P1V), (P2U, P2V), (P3U, P3V), and (P4U, P4V).

The type evaluating portion 134 evaluates that the vehicle VB is in the crosswise direction when the following Equation (1) is satisfied, evaluating that the vehicle VB is perpendicular parked PC.

$$|\text{P1U-P2U}| \,/\, |\text{P1V-P3V}| \geq \text{TH1} \qquad (1)$$

The left side of the equation is the ratio of the size of the rectangular region RB in the crosswise direction to the size of the rectangular region RB in the vertical direction. A first threshold value TH1 is, for example, 1.5. When Equation (2), below, is satisfied, the type evaluating portion 134 evaluates that the vehicle VB is in the lengthwise direction, and that the vehicle VB is parallel parked PA. The second threshold value TH2 is a threshold value that is less than the first threshold value TH1, at, for example, 1.2.

$$|P1U-P2U| \, / \, |P1V-P3V| < TH2 \qquad (2)$$

Moreover, when the following equation (3) is satisfied, the type evaluating portion 134 evaluates that the vehicle VB is in an angled direction, and evaluates that the vehicle VB is angle parked PB.

$$TH2 \leq |P1U-P2U| \, / \, |P1V-P3V| < TH1 \qquad (3)$$

In this way, because the parking type PK is determined based on the ratio of the size of the rectangular region RB in the crosswise direction to the size of the rectangular region RB in the lengthwise direction, the type determining portion 134 can determine the parking type PK through a simple process.

The process for evaluating the parking type PK will be explained next based on the vehicle body direction DB for each of the vehicles 2, in reference to FIG. 4. FIG. 4 is a diagram showing the relationship between the parking type PK and the angle θ formed between the vehicle 1 travel direction D1 and the direction DB of the vehicle 2.

As illustrated in FIG. 4, when, for example, the angle θ satisfies, for example, Equation (4) or Equation (5), the type evaluating portion 134 evaluates that the parking type PK of the vehicle 2 is parallel parking PA:

$$-25° < θ \leq 25° \qquad (4)$$

$$155 < θ \leq 205° \qquad (5)$$

Additionally, if the angle θ satisfies, for example, Equation (6) or Equation (7), the type evaluating portion 134 evaluates that the parking type PK of the vehicle 2 is perpendicular parking PC:

$$55° < θ \leq 115° \qquad (6)$$

$$245 < θ \leq 295° \qquad (7)$$

Additionally, if the angle θ does not satisfy any of Equation (4) through Equation (7), the type evaluating portion 134 evaluates that the parking type PK of the vehicle 2 is angle parking PB.

In this way, the type evaluating portion 134 evaluates the parking type PK depending on the angle θ formed between the travel direction D1 of the vehicle 1 and the direction DB of the vehicle 2, enabling evaluation of the parking type PK through a simple process.

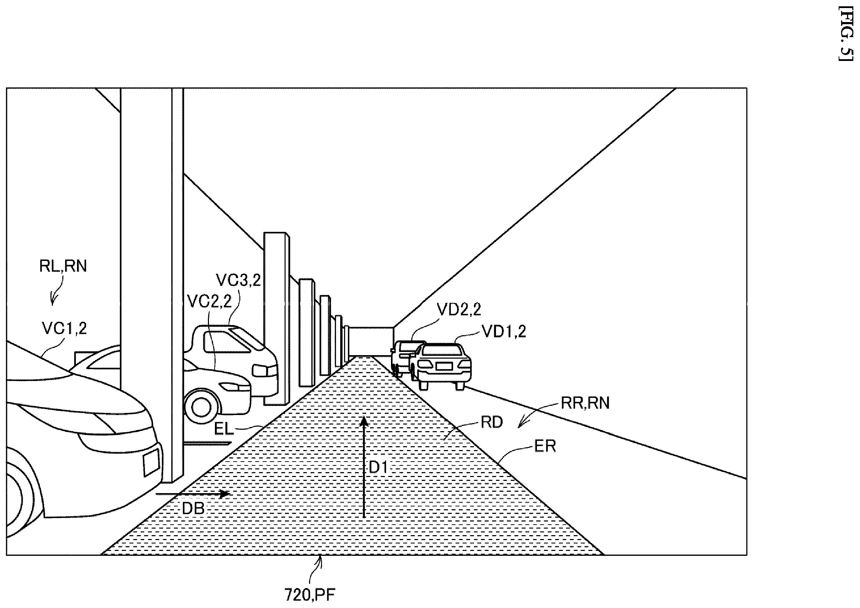

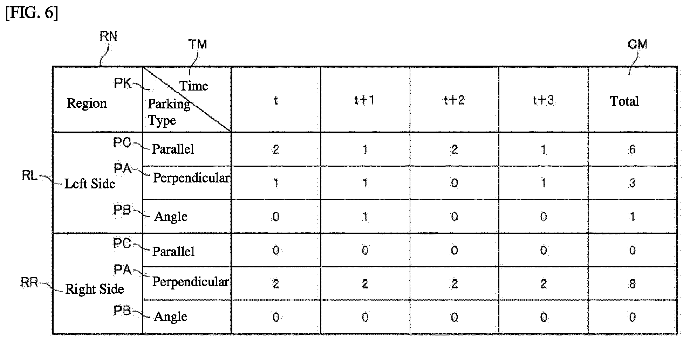

Next, with reference to FIG. 5 and FIG. 6, the process of the type determining portion 135 will be explained. FIG. 5 is a captured image 720 showing an example of a process for the type determining portion 135. The captured image 720 corresponds to an example of a captured image PF.

In the captured image 720 the vehicle 1 is traveling on a road that corresponds to a road image RD. The road that corresponds to the road image RD is a road for one-way travel, and extends along the travel direction D1 of the vehicle 1. A left edge line EL indicates the location of the left edge of the road. A right edge line ER indicates the location of the right edge of the road.

The region dividing portion 132 divides the captured image PF into a left side region RL and a right side region RR.

The left side region RL is the region to the left of the left edge line EL. The right side region RR is the region on the right side of the right edge line ER. The left side region RL and right side region RR each corresponds to an example of the plurality of regions RN.

A vehicle VC1, a vehicle VC2, and a vehicle VC3 are parked in the left side region RL. The vehicle VC1, the vehicle VC2, and the vehicle VC3 correspond to an example of a plurality of other vehicles 2. A vehicle VD1 and a vehicle VD2 are parked in the right side region RR. The vehicle VD1 and the vehicle VD2 correspond to an example of a plurality of other vehicles 2.

The type evaluating portion 134 evaluates, for example, the parking type PK depending on the angle θ formed between the travel direction D1 of the vehicle 1 and the direction DB of the vehicle 2. For example, the direction DB of the vehicle VC1 is shown in FIG. 5. Because of the angle θ formed between the direction of travel D1 of the vehicle 1 and the direction DB of the vehicle VC1 is 90°, the type evaluating portion 134 evaluates that the parking type PK of the vehicle VC1 is perpendicular parking PC.

FIG. 6 is a diagram showing an example of a process of the type determining portion 135. The time TM indicates the time at which the type evaluating portion 134 evaluates the parking type PK. In FIG. 6, the type evaluating portion 134 evaluates the parking type PK four times, when the time TM is (t), (t +1), (t +2), and (t +3). The totals CM for the numbers of vehicles are shown on the right in FIG. 6.

The number of vehicles 2 evaluated by the type evaluating portion 134 as perpendicular parked PC, the number of vehicles 2 evaluated by the type evaluating portion 134 as parallel parked PA, and the number of vehicles 2 evaluated by the type evaluating portion 132evaluating portion 134 as angle parked PB are shown in FIG. 6 for each of the vehicles 2 that are parked in the left side region RL.

For example, at time TM (t), the number of vehicles 2 evaluated as perpendicular parked PC is 2, the number of vehicles 2 evaluated as parallel parked PA is 1, and the number of vehicles 2 evaluated as angle parked PB is 0. In addition, at time TM (t +1), the number of vehicles 2 evaluated as perpendicular parked PC is 1, the number of vehicles 2 evaluated as parallel parked PA is 1, and the number of vehicles 2 evaluated as angle parked PB is 1.

For the total number of vehicles CM in the left side region RL, the number of vehicles 2 evaluated as perpendicular parked PC is 6, the number of vehicles 2 evaluated as parallel parked PA is 3, and the number of vehicles 2 evaluated as angle parked PB is 1. Because the number of vehicles 2 evaluated as perpendicular parked PC is the greatest, the type determining portion 135 determines that the parking type PK of the left side region RL is perpendicular parking PC.

Moreover, for the total number of vehicles CM in the right side region RR, the number of vehicles 2 evaluated as perpendicular parked PC is 0, the number of vehicles 2 evaluated as parallel parked PA is 8, and the number of vehicles 2 evaluated as angle parked PB is 0. Because the number of vehicles 2 evaluated as parallel parked PA is the greatest, the type determining portion 135 determines that the parking type PK of the left side region RL is parallel parking PA.

In this way, for each of the plurality of regions RN, the type determining portion 135 determines, as the parking type PK, the parking type PK with the greatest number of vehicles for each of the plurality of regions RN, enabling the parking type PK to be determined correctly for each of the plurality of regions RN.

Note that the times between each of the four times (t), (t +1) (t +2), and (t +3) that are the times TM are, for example, 0.5 second intervals. In the present embodiment, a case was explained wherein the type determining portion 135 calculates, at each prescribed time, the number of vehicles 2 evaluated as perpendicular parked PC, the number of vehicles 2 evaluated as parallel parked PA, and the number of vehicles 2 evaluated as angle parked PB; however there is no limitation thereto. For example, the type determining portion 135 may instead calculate the number of vehicles 2 evaluated as perpendicular parked PC, the number of vehicles 2 evaluated as parallel parked PA, and the number of vehicles 2 evaluated as angle parked PB with each passing prescribed distance of travel, such as 3 m, of the vehicle 1.

Although, in the present embodiment, the type determining portion 135 determines the parking type PK for each of the plurality of regions RN based on the total numbers CM of the four evaluation results by the type evaluating portion 134, there is no limitation thereto. The type determining portion 135 may determine the parking types PK for each of the plurality of regions RN based on the total numbers CM that are the evaluation results for two times or three times by the type evaluating portion 134. Moreover, the type determining portion 135 may determine the parking type PK for each of the plurality of regions RN based on the total numbers CM of five or more evaluation results by the type evaluating portion 134. Moreover, the type determining portion 135 may determine the parking types PK for each of the plurality of regions RN based on the result of a single evaluation by the type evaluating portion 134.

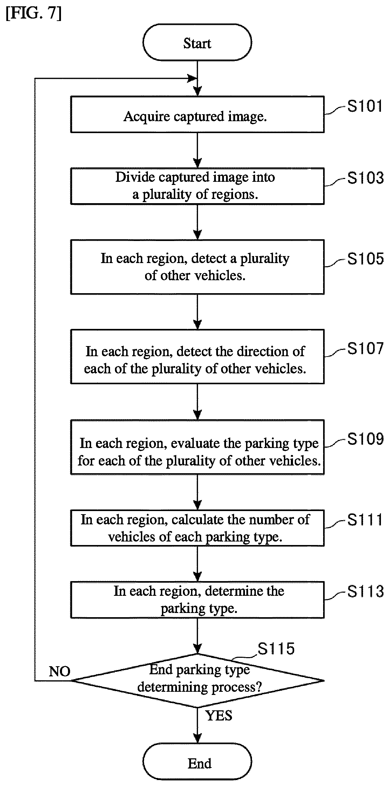

FIG. 7 will be referenced next to explain an example of a process of the parking assisting device 100. FIG. 7 is a flowchart showing an example of a process of the parking assisting device 100.

As illustrated in FIG. 7, first, in Step S101, the image acquiring portion 131 acquires a captured image PF around the vehicle 1.

Next, in Step S103, the region dividing portion 132 divides the captured image PF into a plurality of regions RN.

Next, in Step S105, the vehicle detecting portion 133 detects the pluralities of other vehicles 2 in each of the plurality of regions RN.

Next, in Step S107, the type evaluating portion 134 detects the directions DB of the vehicle body for each of the plurality of other vehicles 2 in each of the plurality of regions RN.

Next, in Step S109, the type evaluating portion 134 evaluates the parking type PK for each of the plurality of other vehicles 2 in each of the plurality of regions RN. The type evaluating portion 134 evaluates the parking type PK for each of the plurality of other vehicles 2 depending on the angle $\theta$ formed between the travel direction D1 of the vehicle 1 and the direction DB of the vehicle body of each of the plurality of other vehicles 2.

Following this, in Step S111, the type determining portion 135 calculates the numbers of vehicles 2 for each of the parking types PK in each of the plurality of regions RN. The type determining portion 135, for example, calculates the number of vehicles 2 evaluated as perpendicular parked PC, the number of vehicles 2 evaluated as parallel parked PA, and the number of vehicles 2 evaluated as angle parked PB in each of the plurality of regions RN.

Following this, in Step S113, the type determining portion 135 determines the parking type PK in each of the plurality of regions RN. The type determining portion 135, for example, determines, as the parking type PK for each of the plurality of regions RN, the parking type PK that has the greatest number of vehicles, for each of the plurality of regions RN. In the present embodiment, the plurality of regions RN corresponds to the left side region RL and the right side region RR.

Next, in Step S115, based on an operation by the user on the operating portion 50 the parking assisting device 100 evaluates whether or not to terminate the parking type determining process.

If the parking assisting device 100 evaluates that the parking type determining process is to be terminated (Step S115: YES), the process is terminated. If the parking assisting device 100 evaluates that the parking type determining process is not to be terminated (Step S115: NO), processing returns to Step S111.

Step S101 corresponds to an example of an "image acquiring step."

Step S103 corresponds to an example of a "vehicle detecting step."

Step S109 corresponds to an example of a "type evaluating step."

Step S113 corresponds to an example of a "type determining step."

In the above, as explained in reference to FIG. 1 through FIG. 6, the parking assisting device 100 according to the present embodiment comprises: an image acquiring portion 131 for acquiring a captured image PF around the vehicle 1; a vehicle detecting portion 133 for using the captured image PF to detect a plurality of other vehicles 2, parked around the vehicle 1; a type evaluating portion 134 for evaluating the parking type PK, indicating parallel parking PA, perpendicular parking PC, or angle parking PB, for each of the plurality of other vehicles 2; and a type determining portion 135 for determining, as the parking type PK for a region RN in which a plurality of other vehicles 2 are parked, the parking type PK with the greatest number of vehicles, of the plurality of other vehicles 2, based on the evaluation result by the type evaluating portion 134.

That is, the parking type PK, indicating parallel parking PA, perpendicular parking PC, or angle parking PB, is evaluated for each of the plurality of other vehicles 2, and the parking type PK with the greatest number of vehicles, of the plurality of other vehicles 2, is determined as the parking type PK for the region RN wherein the plurality of other vehicles 2 are parked.

The result is that the parking type PK for the region RN wherein the plurality of other vehicles 2 are parked can be determined correctly.

Moreover, the parking assisting device 100 comprises a region dividing portion 132 for dividing the captured image PF into a plurality of regions RN based on the direction of travel D1 of the vehicle 1, and the type determining portion 135 determines the parking type PK with the greatest number of vehicles, for each of the plurality of regions RN, as the parking type PK for each of the plurality of regions RN.

The result is that the parking type PK can be determined correctly for each of the plurality of regions RN.

Moreover, in the parking assisting device 100, the region dividing portion 132 extracts, from the captured image PF, a road image RD that is an image of the road traveled by the vehicle 1, to divide the captured image PF into a plurality of regions RN based on the road image RD.

The result is that the captured image PF can be divided correctly into a plurality of regions RN.

Moreover, in the parking assisting device 100, the type evaluating portion 134 detects the direction DB of the vehicle body for each of the plurality of other vehicles 2, and evaluates the parking type PK based on the direction DB of the vehicle body. For example, as explained in reference to FIG. 4, the type evaluating portion 134 evaluates the parking type PK based on the angle $\theta$ formed between the vehicle body direction DB and the direction of travel D1 of the vehicle 1. The result is that the parking types PK can be evaluated correctly for each of the plurality of other vehicles 2.

Moreover, the parking assisting method according to the present embodiment includes: an image acquiring step for acquiring a captured image PF around the vehicle 1; a vehicle detecting step for using the captured image PF to detect a plurality of other vehicles 2 parked around the vehicle 1; a type evaluating step for evaluating the parking type PK, indicating either parallel parking PA, perpendicular parking PC, or angle parking PB, for each of the plurality of other vehicles 2; and a type determining step for determining, as the parking type PK for a region RN wherein the plurality of other vehicles 2 are parked, the parking type PK with the greatest number of vehicles, of the plurality of other vehicles 2, based on the evaluation result in the type evaluating step. As a result, the parking assisting method according to the present embodiment has the same effects as those of the parking assisting device 100 of the present embodiment.

The embodiment set forth above is no more than an illustration of one form of the present invention.

For example, for ease in understanding the present invention, FIG. 1 is a diagram wherein the structural elements are shown partitioned into the main processing details, and the structural elements may be partitioned into more structural elements depending on the processing details. Moreover, the partitioning may be such that more processes are carried out by a single structural element.

Moreover, the processes in any of the structural elements may be executed in a single hardware or executed by a plurality of hardware.

Moreover, the processes of each structural element may be achieved by a single program, or by a plurality of programs.

Moreover, in FIG. 1 the parking assisting device 100 may be provided integrated with the location detecting unit 10, the operating portion 50, and/or the displaying portion 60.

Moreover, while in the present embodiment the parking assisting device 100 comprises an image acquiring portion 131, a region dividing portion 132, a vehicle detecting portion 133, a type evaluating portion 134, and a type determining portion 135, there is no limitation thereto. A server device that can connect to the parking assisting device 100 through a network, such as the Internet, so as to enable communication may comprise the region dividing portion 132, the vehicle detecting portion 133, the type evaluating portion 134, and/or the type determining portion 135. The server device may, for example, comprise the region dividing portion 132, the vehicle detecting portion 133, the type evaluating portion 134, and the type determining portion 135.

Additionally, while in the present embodiment the explanation was for a case wherein the memory 110 stores the trained model MD1 and be trained model MD2, there is no limitation thereto. For example, a server device that is connected to the parking assisting device 100 so as to enable communication may store the trained model MD1 and/or trained model MD2.

For example, if the server device stores the trained model MD1, the vehicle detecting portion 133 transmits, to the server device, a captured image PF for each of the plurality of other vehicles 2. Given this, the server device, through inputting the captured image PF into the trained model MD1, outputs the locations of the vehicles 2 or the areas thereof in the images. The vehicle detecting portion 133 acquires, from the server device, the positions in the images, or areas in the images, of the vehicles 2.

Moreover, if, for example, the server device stores the trained model MD2, the type evaluating portion 134 transmits the captured image PF of each of the plurality of other vehicles 2 to the server device. The server device, through inputting the captured image PF of each of the plurality of other vehicles 2 into the trained model MD2, outputs the direction DB of the vehicle body of each of the vehicles 2. The type evaluating portion 134 acquires the direction DB of the vehicle body of each of the vehicles 2 from the server device.

Additionally, if the parking assisting method according to the present invention is achieved using a computer, it may be structured in the form of a medium on which is recorded a control program PGM that is executed by a computer, or a transmission medium for transmitting the control program PGM.

The recording medium may use a magnetic or optical recording medium, or a semiconductor memory device. Specifically, it may be a fixed recording medium or a portable recording medium such as a flexible disk, an HDD, a CD-ROM (Compact Disk Read-Only Memory), a DVD, a Blu-ray® disc, a magnetooptical disc, a flash memory, a card-type recording medium, or the like. Additionally, the recording medium may be a non-volatile storage device, such as a RAM, ROM, HDD, or the like, provided in the parking assisting device 100.

The control program PGM may be downloaded by the parking assisting device 100 from a server device that is connected to the parking assisting device 100 through a network so as to enable communication.

Additionally, for example, the processing units in the flowchart shown in FIG. 7 are divided depending on main process content, for ease in understanding the processing of the parking assisting device 100; however the present invention is not limited by the way in which the processing units are divided, nor by the names thereof. The processes of the parking assisting device 100 may be divided into a greater number of processing units depending on the process details. Moreover, in the processes of the parking assisting unit 100, the divisions may be such that a greater number of processes are included in a single processing unit.

[Explanation of Reference Symbols]

1: Vehicle
2: Other Vehicle
31: Front Camera
100: Parking Assisting Device
131: Image Acquiring Portion
133: Vehicle Detecting Portion
134: Type Evaluating Portion
135: Type Determining Portion
PA: Parallel Parking
PB: Angle Parking
PC: Perpendicular Parking
PF: Captured Image
PK: Parking Type

**Claims**

1. A parking assisting device (100) comprising:

an image acquiring portion (131) for acquiring a captured image (PF) around a vehicle (1);
a vehicle detecting portion (133) for using the captured image (PF) to detect a plurality of other vehicles (2) that are parked around the vehicle (1);
a type evaluating portion (134) for evaluating a parking type (PK), indicating parallel parking (PA), perpendicular parking (PC), or angle parking (PB), for each of the plurality of other vehicles (2) at each prescribed time or with each passing prescribed distance of travel ; and
a type determining portion (135) for determining, as the parking type (PK) for a region (RN) wherein the plurality of other vehicles (2) is parked, the parking type (PK) of the greatest number of vehicles (2) among the plurality of other vehicles (2), based on the evaluation result by the type evaluating portion (134).

2. A parking assisting device (100) set forth in claim 1, further comprising:
a region dividing portion (132) for dividing the captured image (PF) into a plurality of regions (RN) based on a direction of travel (D1) of the host vehicle (1), wherein:
the type determining portion (135) determines, as the parking type (PK) for each of the plurality of regions (RN), the parking type (PK) of the greatest number of vehicles (2), for each of the plurality of regions (RN).

3. A parking assisting device (100) set forth in claim 2, wherein:
the region dividing portion (132) extracts, from the captured image (PF), a road image (RD) that is an image of the road traveled by the vehicle (1), and divides the captured image into a plurality of regions (RN) based on the extracted road image.

4. A parking assisting device (100) set forth in any one of claim 1 through claim 3, wherein:
the type evaluating portion (134) detects the direction (DB) of the vehicle body for each of the plurality of vehicles (2), and evaluates the parking type (PK) based on the direction (DB) of the vehicle body.

5. A parking assisting method, including:

an image acquiring step (S101) for acquiring a captured image (PF) around a vehicle (1);
a vehicle detecting step (S105) for using the captured image (PF) to detect a plurality of other vehicles (2) that are parked around the vehicle (1);
a type evaluating step (S109) for evaluating a parking type (PK), indicating parallel parking, perpendicular parking, or angle parking, for each of the plurality of other vehicles (2) at each prescribed time or with each passing prescribed distance of travel; and
a type determining step (S113) for determining, as the parking type (PK) for a region wherein the plurality of other vehicles (2) is parked, the parking type (PK) of the greatest number of vehicles (2) among the plurality of other vehicles (2), based on the evaluation result in the type evaluating step (S109).

**Patentansprüche**

1. Parkassistenzvorrichtung (100), umfassend:

einen Bilderfassungsabschnitt (131) zum Erfassen eines aufgenommenen Bildes (PF) um ein Fahrzeug (1);
einen Fahrzeugerkennungsabschnitt (133) zum Verwenden des aufgenommenen Bildes (PF), um eine Vielzahl anderer Fahrzeuge (2) zu erkennen, die um das Fahrzeug (1) herum geparkt sind;
einen Typbewertungsabschnitt (134) zum Bewerten eines Parktyps (PK), der Parallelparken (PA), senkrechtes Parken (PC) oder Winkelparken (PB) anzeigt, für jedes der Vielzahl anderer Fahrzeuge (2) zu jeder vorgeschriebenen Zeit oder bei jedem Durchlaufen einer vorgeschriebenen Fahrstrecke; und
einen Typbestimmungsabschnitt (135) zum Bestimmen, als den Parktyp (PK) für einen Bereich (RN), wobei die Vielzahl anderer Fahrzeuge (2) geparkt ist, des Parktyps (PK) der größten Anzahl von Fahrzeugen (2) unter der Vielzahl anderer Fahrzeuge (2), basierend auf dem Bewertungsergebnis durch den Typbewertungsabschnitt (134).

2. Parkassistenzvorrichtung (100) nach Anspruch 1, ferner umfassend:
einen Bereichsunterteilungsabschnitt (132) zum Unterteilen des aufgenommenen Bildes (PF) in eine Vielzahl von Bereichen (RN) basierend auf einer Fahrtrichtung (D1) des Trägerfahrzeugs (1), wobei:
der Typbestimmungsabschnitt (135) als Parktyp (PK) für jede der Vielzahl von Bereichen (RN) den Parktyp (PK) der größten Anzahl von Fahrzeugen (2) für jede der Vielzahl von Bereichen (RN) bestimmt.

**3.** Parkassistenzvorrichtung (100) nach Anspruch 2, wobei:
der Bereichsunterteilungsabschnitt (132) aus dem aufgenommenen Bild (PF) ein Straßenbild (RD), das ein Bild der von dem Fahrzeug (1) befahrenen Straße ist, extrahiert und das aufgenommene Bild basierend auf dem extrahierten Straßenbild in eine Vielzahl von Bereichen (RN) unterteilt.

**4.** Parkassistenzvorrichtung (100) nach einem der Ansprüche 1 bis 3, wobei:
der Typbewertungsabschnitt (134) die Richtung (DB) der Fahrzeugkarosserie für jedes der Vielzahl von Fahrzeugen (2) erkennt und den Parktyp (PK) basierend auf der Richtung (DB) der Fahrzeugkarosserie bewertet.

**5.** Parkassistenzverfahren, einschließend:

einen Bilderfassungsschritt (S101) zum Erfassen eines aufgenommenen Bildes (PF) um ein Fahrzeug (1);
einen Fahrzeugerkennungsschritt (S105) zum Verwenden des aufgenommenen Bildes (PF), um eine Vielzahl anderer Fahrzeuge (2) zu erkennen, die um das Fahrzeug (1) herum geparkt sind;
einen Typbewertungsschritt (S109) zum Bewerten eines Parktyps (PK), der Parallelparken, senkrechtes Parken oder Winkelparken anzeigt, für jedes der Vielzahl anderer Fahrzeuge (2) zu jeder vorgeschriebenen Zeit oder bei jedem Durchlaufen einer vorgeschriebenen Fahrstrecke; und
einen Typbestimmungsschritt (S113) zum Bestimmen, als den Parktyp (PK) für einen Bereich, wobei die Vielzahl von anderen Fahrzeugen (2) geparkt ist, des Parktyps (PK) der größten Anzahl von Fahrzeugen (2) unter der Vielzahl von anderen Fahrzeugen (2), basierend auf dem Bewertungsergebnis in dem Typbewertungsschritt (S109).

**Revendications**

**1.** Dispositif d'aide au stationnement (100), comprenant :

une partie d'acquisition d'image (131) pour acquérir une image capturée (PF) autour d'un véhicule (1) ;
une partie de détection de véhicule (133) pour utiliser l'image capturée (PF) afin de détecter une pluralité d'autres véhicules (2) qui est stationnée autour du véhicule (1) ;
une partie d'évaluation de type (134) pour évaluer un type de stationnement (PK), indiquant un stationnement en créneau (PA), un stationnement en bataille (PC) ou un stationnement en épi (PB), pour chaque véhicule parmi la pluralité d'autres véhicules (2) à chaque moment prescrit ou à chaque passage d'une distance de déplacement prescrite ; et
une partie de détermination de type (135) pour déterminer, en tant que type de stationnement (PK) pour une région (RN) dans laquelle la pluralité d'autres véhicules (2) est stationnée, le type de stationnement (PK) du plus grand nombre de véhicules (2) parmi la pluralité d'autres véhicules (2) sur la base du résultat d'évaluation par la partie d'évaluation de type (134).

**2.** Dispositif d'aide au stationnement (100) selon la revendication 1, comprenant en outre :
une partie de division en région (132) pour diviser l'image capturée (PF) en une pluralité de régions (RN) sur la base d'une direction de déplacement (D1) du véhicule (1) hôte, dans lequel :
la partie de détermination de type (135) détermine, en tant que type de stationnement (PK) pour chaque région parmi la pluralité de régions (RN), le type de stationnement (PK) du plus grand nombre de véhicules (2) pour chaque région parmi la pluralité de régions (RN).

**3.** Dispositif d'aide au stationnement (100) selon la revendication 2, dans lequel :
la partie de division en région (132) extrait, à partir de l'image capturée (PF), une image de route (RD) qui est une image de la route parcourue par le véhicule (1) et divise l'image capturée en une pluralité de régions (RN) sur la base de l'image de route extraite.

**4.** Dispositif d'aide au stationnement (100) selon l'une quelconque des revendications 1 à 3, dans lequel :
la partie d'évaluation de type (134) détecte la direction (DB) du corps de véhicule pour chaque véhicule parmi la pluralité de véhicules (2) et évalue le type de stationnement (PK) sur la base de la direction (DB) du corps de véhicule.

**5.** Procédé d'aide au stationnement, comportant :

une étape d'acquisition d'image (S101) pour acquérir une image capturée (PF) autour d'un véhicule (1) ;

une étape de détection de véhicule (S105) pour utiliser l'image capturée (PF) afin de détecter une pluralité d'autres véhicules (2) qui est stationnée autour du véhicule (1) ;

une étape d'évaluation de type (S109) pour évaluer un type de stationnement (PK), indiquant un stationnement en créneau, un stationnement en bataille ou un stationnement en épi, pour chaque véhicule parmi la pluralité d'autres véhicules (2) à chaque moment prescrit ou à chaque passage d'une distance de déplacement prescrite ; et

une étape de détermination de type (S113) pour déterminer, en tant que type de stationnement (PK) pour une région dans laquelle la pluralité d'autres véhicules (2) est stationnée, le type de stationnement (PK) du plus grand nombre de véhicules (2) parmi la pluralité d'autres véhicules (2) sur la base du résultat d'évaluation à l'étape d'évaluation de type (S109).

[FIG. 1]

[FIG. 2]

[FIG. 3]

[FIG. 4]

[FIG. 5]

[FIG. 6]

| Region | Parking Type | t | t+1 | t+2 | t+3 | Total |
|---|---|---|---|---|---|---|
| Left Side | Parallel | 2 | 1 | 2 | 1 | 6 |
| | Perpendicular | 1 | 1 | 0 | 1 | 3 |
| | Angle | 0 | 1 | 0 | 0 | 1 |
| Right Side | Parallel | 0 | 0 | 0 | 0 | 0 |
| | Perpendicular | 2 | 2 | 2 | 2 | 8 |
| | Angle | 0 | 0 | 0 | 0 | 0 |

[FIG. 7]

```
                    ┌─────────────┐
                    │    Start    │
                    └─────────────┘
                           │
    ┌──────────────────────│
    │                      ▼
    │   ┌──────────────────────────────────┐   ─S101
    │   │      Acquire captured image.      │
    │   └──────────────────────────────────┘
    │                      │
    │                      ▼
    │   ┌──────────────────────────────────┐   ─S103
    │   │      Divide captured image into   │
    │   │      a plurality of regions.      │
    │   └──────────────────────────────────┘
    │                      │
    │                      ▼
    │   ┌──────────────────────────────────┐   ─S105
    │   │     In each region, detect a      │
    │   │   plurality of other vehicles.    │
    │   └──────────────────────────────────┘
    │                      │
    │                      ▼
    │   ┌──────────────────────────────────┐   ─S107
    │   │ In each region, detect the        │
    │   │ direction of each of the          │
    │   │ plurality of other vehicles.      │
    │   └──────────────────────────────────┘
    │                      │
    │                      ▼
    │   ┌──────────────────────────────────┐   ─S109
    │   │ In each region, evaluate the      │
    │   │ parking type for each of the      │
    │   │ plurality of other vehicles.      │
    │   └──────────────────────────────────┘
    │                      │
    │                      ▼
    │   ┌──────────────────────────────────┐   ─S111
    │   │ In each region, calculate the     │
    │   │ number of vehicles of each        │
    │   │ parking type.                     │
    │   └──────────────────────────────────┘
    │                      │
    │                      ▼
    │   ┌──────────────────────────────────┐   ─S113
    │   │ In each region, determine the     │
    │   │ parking type.                     │
    │   └──────────────────────────────────┘
    │                      │
    │                      ▼         S115
    │   NO        ◇ End parking type ◇
    └────────────    determining process?
                          │
                         YES
                          │
                          ▼
                    ┌─────────────┐
                    │     End     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016101778 A

- US 2009128364 A

**Non-patent literature cited in the description**

- **NEBIKER STEPHAN et al.** Outdoor mobile mapping and AI-Based 3D object detection with low-cost RGB-D Cameras: The Use Case of On-Street Parking Statistics. *Remote Sensing*, 05 August 2021, vol. 13 (16), 3099